# EUROPÄISCHE PATENTSCHRIFT

(11) **EP 2 536 601 B1**
(45) Veröffentlichungstag und Bekanntmachung des Hinweises auf die Patenterteilung: **30.07.2014**
(21) Anmeldenummer: 10796435.5
(22) Anmeldetag: 27.12.2010
(51) Int. Cl.: B60S 1/24

(54) **WISCHERGESTÄNGE**
WIPER LINKAGE
TRINGLERIE D'ESSUIE-GLACE

(30) Priorität: 16.02.2010 DE 102010001968
(43) Veröffentlichungstag der Anmeldung: 26.12.2012
(73) Patentinhaber: Robert Bosch GmbH, 70442 Stuttgart (DE)
(72) Erfinder: ZIMMER, Joachim, 410100 Changsha (DE)
(86) Internationale Anmeldenummer: PCT/EP2010/070758
(87) Internationale Veröffentlichungsnummer: WO 2011/101061

(56) Entgegenhaltungen:
- EP-A1- 1 428 734
- EP-A2- 2 127 968
- WO-A1-2004/052700
- DE-A1- 3 838 976

## Beschreibung

Die Erfindung betrifft ein Wischergestänge einer Scheibenwaschanlage für ein Kraftfahrzeug.

### Stand der Technik

Wischergestänge weisen üblicherweise eine Motorkurbel auf, welche mit einer Abtriebswelle eines Antriebsmotors, insbesondere eines Wischermotors, verbunden ist, über welche die Motorkurbel von dem Antriebsmotor angetrieben wird. An der Motorkurbel ist üblicherweise ein Kugelbolzen oder ein Doppelkugelbolzen vorgesehen, an welchem im Falle eines Doppelkugelbolzens eine erste Gelenkstange für einen ersten Scheibenwischer und eine zweite Gelenkstange für einen zweiten Scheibenwischer angeordnet ist. Hierdurch werden zwei gleichläufige Scheibenwischerarme realisiert, welche jeweils auf der Fahrerseite bzw. auf der Beifahrerseite wirken. Um möglichst geringe Kräfte an den Gelenkstangen zu erhalten, besitzt die Motorkurbel üblicherweise eine relativ große Länge. Daraus ergibt sich ein großer Radius der Kurbelbahn der Motorkurbel, die zusammen mit dem üblicherweise kleinen Verhältnis vom Kurbelradius zur Stangenlänge von ca. 1/4 bis 1/7 ein entsprechend großes Bauvolumen und einen entsprechend benötigten Bewegungsraum für das Wischergestänge erfordert. Typische Gleichlaufanlagen zweier Scheibenwischerarme haben auf der Beifahrerseite einen deutlich größeren Wischwinkel als auf der Fahrerseite. Mit heute üblichem gleichen Motorkurbelradius für den Antrieb von Fahrerseite und Beifahrerseite resultieren daraus ungleiche Schwingenlängen für die über die Gelenkstangen verbundenen Scheibenwischerarme an beiden Antriebsachsen des Wischergestänges. Eine üblicherweise verwendete Gleichlauf-Wischeranlage mit Wischwinkeln auf der Fahrerseite von 80° und auf der Beifahrerseite von 90° mit einem Motorkurbelradius von jeweils 45 mm weist resultierende Schwingradien des Scheibenwischerarms auf der Fahrerseite von 70,2 mm und resultierende Schwingradien des Scheibenwischerams auf der Beifahrerseite von 63,5 mm auf. Insbesondere für die Beifahrerseite ist dies nachteilig, da sich für diesen relativ langen Scheibenwischarm eine nur kurze Schwingenlänge ergibt. Daraus wiederum resultiert ein ungünstiges Übersetzungsverhältnis zwischen beiden Antriebsschwingenlängen. Der Nachteil sind sowohl größere Wischwinkeltoleranzen und erhöhte innere Kräfte im Wischerantrieb aufgrund der kurzen Schwingenlänge. Darüber hinaus verstärkt sich dieser Effekt beim Einsatz in Reversiersystemen. Bei einem Rundläufermotor dreht die Motorkurbel für einen Wischzyklus um 360°. Bei Wischergestängen mit Reversiermotoren liegt der Motorkurbelarbeitswinkel typischerweise bei ca. 145° bis 165°. Daraus resultiert im Vergleich zum Rundläufer eine Reduzierung des Arbeitsweges des Kugelbolzens von ca. 8-19%. In diesem Verhältnis müssen beide Schwingenlängen weiter reduziert werden, um die erforderlichen Wischwinkel einzustellen, woraus aufgrund der geringen wirksamen Hebelarme wiederum eine Erhöhung der inneren Kräfte im Wischsystem resultiert. Diese hohen inneren Kräfte und das ungünstige Verhältnis zwischen Scheibenwischarmlänge und Schwingenlänge macht das Wischsystem empfindlich gegenüber äußeren Störungen, was zu einem Rattern der Scheibenwischerarme führen kann und somit die Vorteile, die das Reversiersystem mit Drehzahlsteuerung hat, nicht zum Tragen kommen.

Dokument EP-A-1 428 734 offenbart ein Wischergestänge gemäß das erste Teil des Anspruchs 1.

### Offenbarung der Erfindung

Es ist daher Aufgabe der Erfindung, ein Wischergestänge einer Scheibenwaschanlage für ein Kraftfahrzeug zur Verfügung zu stellen, welche eine verbesserte Kinematik aufweist, wodurch die Funktionsqualität des Wischergestänges verbessert werden kann und dadurch die Einsatzmöglichkeiten erweitert werden können.

Die Lösung der Aufgabe erfolgt erfindungsgemäß durch die Merkmale des Anspruchs 1. Vorteilhafte Ausgestaltungen der Erfindung sind in den Unteransprüchen angegeben.

Das erfindungsgemäße Wischergestänge einer Scheibenwaschanlage für ein Kraftfahrzeug weist eine Motorkurbel mit einem ersten Endabschnitt und einem zweiten Endabschnitt auf, wobei die Motorkurbel an ihrem ersten Endabschnitt über ein Verbindungselement mit einem Antriebsmotor verbunden ist und wobei die Motorkurbel an ihrem zweiten Endabschnitt einen Doppelkugelbolzen aufweist, welcher mit einer ersten Gelenkstange und einer zweiten Gelenkstange verbunden ist, wobei durch eine Verdrehbewegung der Motorkurbel ein erster Kurbelradius auf die erste Gelenkstange und ein zweiter Kurbelradius auf die zweite Gelenkstange übertragbar ist. Weiterhin weist der erste Kurbelradius der ersten Gelenkstange eine andere Größe auf als der zweite Kurbelradius der zweiten Gelenkstange. Die Erfindung zeichnet sich dadurch aus, dass der Doppelkugelbolzen eine Symmetrieachse aufweist, welche in einer Betriebsposition winklig zu der Symmetrieachse des Verbindungselements vorgesehen ist.

Dieses erfindungsgemäße Wischergestänge ist in Form eines sogenannten Mitteiabtrieb-Wischergestänges ausgebildet, welches für Wischersysteme mit zwei Scheibenwischerarmen vorgesehen ist. Die Motorkurbel ist an ihrem ersten Endabschnitt über ein Verbindungselement vorzugsweise in Form einer Abtriebswelle des Antriebsmotors verbunden, über welche die Motorkurbel eine Verschwenkbewegung um die Symmetrieachse des Verbindungselements zur Realisierung eines bzw. zweier Kurbelradien ausführen kann. An ihrem zweiten Endabschnitt weist die Motorkurbel einen Doppelkugelbolzen auf, an welchem eine erste Gelenkstange für einen ersten Scheibenwischerarm und eine zweite Gelenkstange für einen zweiten Scheibenwischerarm angeordnet ist. Beispielsweise kann die erste Gelenkstange für einen Scheibenwischerarm für die Fahrerseite und die zweite Gelenkstange für einen Scheibenwischerarm für die Beifahrerseite ausgebildet sein. Durch eine Verdrehbewegung der Motorkurbel während eines Wischvorganges wird ein erster Kurbelradius auf die erste Gelenkstange und ein zweiter Kurbelradius auf die zweite Gelenkstange übertragen, wobei es bei den bekannten Wischergestängen vorgesehen ist, dass diese beiden Kurbelradien gleich groß ausgebildet sind. Erfindungsgemäß ist es nun vorgesehen, dass der erste Kurbelradius der ersten Gelenkstange sich von dem zweiten Kurbelradius der zweiten Gelenkstange unterscheidet, so dass diese nun nicht mehr die gleiche Größe aufweisen. Das erfindungsgemäße Wischergestänge wird somit nunmehr mit zwei unterschiedlichen Kurbelradien an der Motorkurbel ausgeführt. Die beiden unterschiedlichen Motorkurbelradien werden dabei so eingestellt, dass sich eine optimierte Kinematik in der Wischbewegung der Wischergestänge ergibt. Durch die optimal aufeinander abgestimmten unterschiedlichen Kurbelradien ergeben sich Schwingradien für die Gelenkstangen bzw. die Scheibenwischerarme auf der Fahrerseite und der Beifahrerseite mit einer im Wesentlichen gleichen Größe. Dadurch können die sonst üblichen Schwinglängenunterschiede zwischen des Scheibenwischerarms der Fahrerseite und des Scheibenwischerarms der Beifahrerseite weitestgehend reduziert werden, wodurch Wischwinkeltoleranzen der Scheibenwischerarme reduziert werden können. Beim Einsatz von Wischergestängen mit gleichen Schwingenlängen der Scheibenwischerarme wird die Robustheit gegenüber äußeren Störungen gesteigert, wodurch Ratterneigungen der Scheibenwischerarme reduziert werden können und dadurch eine Verbesserung der Systemperformance bei kritischen Umgebungsbedingungen erreicht werden kann. Dies ist vor allem bei Reversiersystemen vorteilhaft, da hier Nachteile durch den prinzipbedingten kleineren Motorkurbelarbeitswinkel kompensiert werden können. Darüber hinaus ist aufgrund geringerer innerer Kräfte eine kleinere Dimensionierung der einzelnen Bauteile des Wischergestänges möglich, wodurch Möglichkeiten zur Kosten- und Gewichtsreduzierung eröffnet werden.

Dabei ist es vorgesehen, dass der Doppelkugelbolzen eine Symmetrieachse aufweist, welche in einer Betriebsposition winkelig zu der Symmetrieachse des Verbindungselements vorgesehen ist. Die Symmetrieachse des Doppelkugelbolzen ist dabei derart zu der Symmetrieachse des Verbindungselements angeordnet, dass diese nun nicht mehr, wie es üblicherweise vorgesehen ist, parallel zueinander verlaufen, sondern zueinander verkippt sind bzw. zueinander schräg gestellt sind. Winkelig bedeutet in diesem Fall, dass die Symmetrieachsen nicht parallel zueinander verlaufen. Durch diese Ausgestaltung ist es auf einfache und kostengünstige Weise möglich, unterschiedliche Kurbelradien der ersten Gelenkstange und der zweiten Gelenkstange zu realisieren.

Hierbei ist es bevorzugt vorgesehen, dass die Symmetrieachse des Doppelkugelbolzens in Richtung der Symmetrieachse des Verbindungselements geneigt ist. Dadurch ist es möglich, den Kurbelradius der Gelenkstange, welcher an dem Doppelkugelbolzen näher an der Motorkurbel vorgesehen ist, größer einzustellen als den Kurbelradius der Gelenkstange, welcher weiter von der Motorkurbel entfernt an dem Doppelkugelbolzen angeordnet ist. Dadurch ist es möglich, den effektiven Bauraumbedarf nicht zu steigern, da in der Regel der erforderliche Arbeitsbereich der Gelenkstange bzw. des Wischerarmes des Wischergestänges, welche am weitesten von der Motorkurbel an dem Doppelkugelbolzen angeordnet ist, ausschlaggebend für den Bauraumbedarf bzw. das Packaging des Wischergestänges ist. Vorzugsweise ist die Gelenkstange, welche näher an der

Motorkurbel an dem Doppelkugelbolzen angeordnet ist, die Gelenkstange, an welcher der Scheibenwischerarm für die Beifahrerseite vorgesehen ist, so dass der Kurbelradius der Gelenkstange bzw. des Scheibenwischerarms für die Beifahrerseite größer ist als der Kurbelradius der Gelenkstange bzw. des Scheibenwischerarms für die Fahrerseite.

Alternativ ist es bevorzugt vorgesehen, dass die Symmetrieachse des Doppelkugelbolzens von der Symmetrieachse des Verbindungselements weg geneigt ist. Dadurch ergibt sich für die Gelenkstange, welche am Weitesten von der Motorkurbel entfernt an dem Doppelkugelbolzen angeordnet ist, ein größerer Kurbelradius und damit ein größerer Abtriebswinkel bzw. Wischwinkel als für die Gelenkstange, welche näher an der Motorkurbel an dem Doppelkugelbolzen angeordnet ist.

Die winkelige Anordnung der Symmetrieachse des Doppelkugelbolzens zu der Symmetrieachse des Verbindungselements wird vorzugsweise dadurch realisiert, dass der zweite Endabschnitt der Motorkurbel winkelig zu dem ersten Endabschnitt der Motorkurbel ausgebildet ist. Die winkelige Anordnung des ersten Endabschnittes zu dem zweiten Endabschnitt bedeutet, dass der zweite Endabschnitt nicht parallel zu dem ersten Endabschnitt angeordnet ist, sondern zu diesem abgeschrägt vorgesehen ist. Dadurch ist es auf besonders einfache Art und Weise möglich, eine winkelige Anordnung der Symmetrieachse des Doppelkugelbolzens zu der Symmetrieachse des Verbindungselements zu realisieren, ohne dabei das Verbindungselement bzw. den Doppelkugelbolzen andersartig ausgestalten zu müssen. Die Motorkurbel selber ist dabei vorzugsweise als eine Stange oder eine längliche Platte ausgebildet, welche einen abgewinkelten Bereich aufweist.

Die winkelige Anordnung des zweiten Endabschnittes der Motorkurbel zu dem ersten Endabschnitt der Motorkurbel ist vorzugsweise dadurch realisiert, dass die Motorkurbel eine Einfachkröpfung aufweist. Bei einer Einfachkröpfung weist die Motorkurbel eine einzigen abgewinkelten Bereich auf, wodurch eine winkelige Anordnung des zweiten Endabschnitts zu dem ersten Endabschnitt realisiert wird.

Alternativ hierzu ist es möglich, dass die Motorkurbel eine Doppelkröpfung aufweist. Bei der Doppelkröpfung weist die Motorkurbel entlang ihrer Längsachse an zwei unterschiedlichen Stellen jeweils einen abgewinkelten Bereich der Motorkurbel auf, wodurch eine winkelige Anordnung des zweiten Endabschnittes zu dem ersten Endabschnitt über zwei Abwinklungsbereiche realisiert wird.

Ferner betrifft die Erfindung eine Scheibenwaschanlage für ein Kraftfahrzeug umfassend ein wie vorstehend aus- und weitergebildetes Wischergestänge.

### Kurze Beschreibung der Zeichnungen

Nachfolgend wird die Erfindung unter Bezugnahme auf die anliegenden Zeichnungen anhand bevorzugter Ausführungsbeispiele näher erläutert.

Es zeigen:
- Fig. 1: eine schematische Darstellung einer Anordnung eines Gleichlaufwischsystems nach dem Stand der Technik;
- Fig. 2: eine schematische Darstellung eines Wischergestänges nach dem Stand der Technik;
- Fig. 3: eine weitere schematische Darstellung eines Wischergestänges nach dem Stand der Technik;
- Fig. 4: eine schematische Darstellung des Verhältnisses der Kurbelradien der Motorkurbel zu den Schwingenlängen der Gelenkstangen bzw. der Scheibenwischerarme bei einem Wischergestänge nach dem Stand der Technik;
- Fig. 5: eine schematische Darstellung des Verhältnisses der Kurbelradien der Motorkurbel zu den Schwingenlängen der Gelenkstange bzw. der Scheibenwischerarme bei einem Wischergestänge gemäß der Erfindung bei einem Rundlaufbetrieb;
- Fig. 6: eine schematische Darstellung des Verhältnisses der Kurbelradien der Motorkurbel zu den Schwingenlängen der Gelenkstange bzw. der Scheibenwischerarme bei einem Wischergestänge gemäß der Erfindung bei einem Reversierbetrieb;
- Fig. 7: eine schematische Darstellung eines erfindungsgemäßen Wischergestänges nach einer ersten Ausführungsform;
- Fig. 8: eine schematische Darstellung eines erfindungsgemäßen Wischergestänges nach einer zweiten Ausführungsform;
- Fig. 9: eine schematische Darstellung eines erfindungsgemäßen Wischergestänges nach einer dritten Ausführungsform.

### Beschreibung der Abbildung

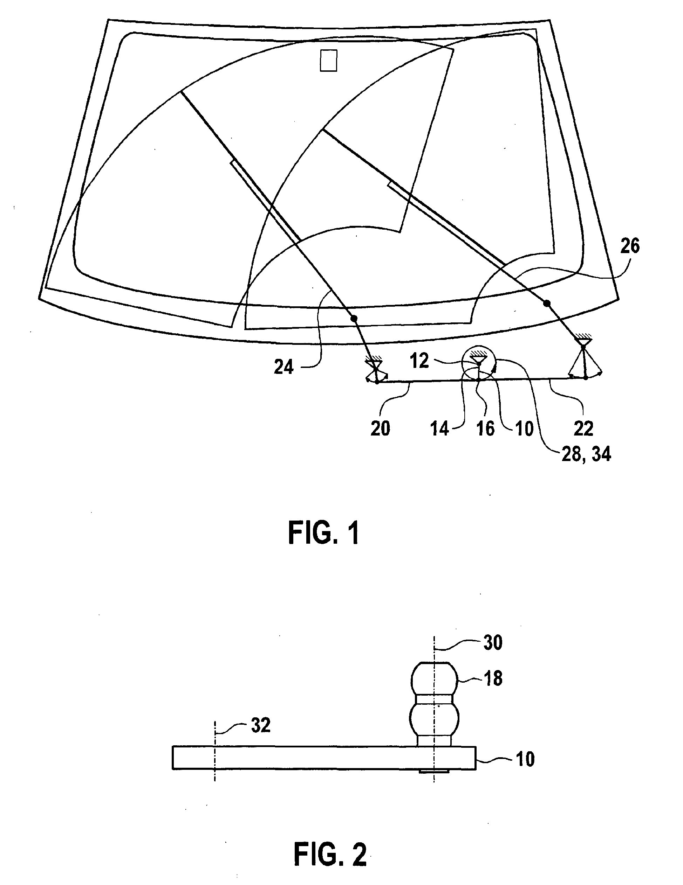

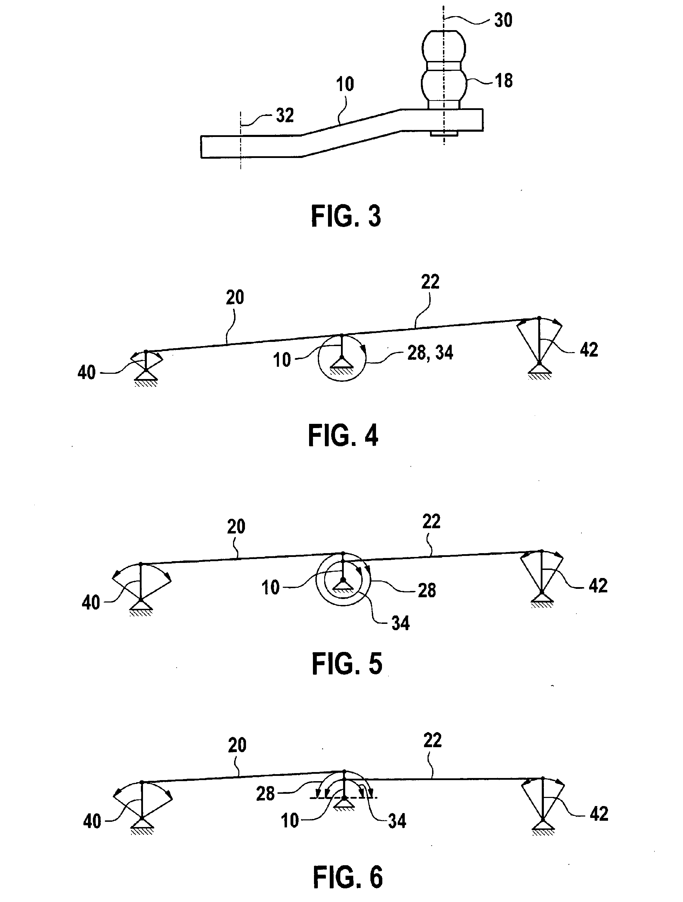

Fig. 1 zeigt eine schematische Darstellung einer Anordnung eines Gleichlaufwischsystems mit einem bekannten Wischergestänge einer Scheibenwaschanlage für ein Kraftfahrzeug, welches eine Motorkurbel 10 aufweist, welche über ein Verbindungselement 12 in Form einer Abtriebswelle mit einem Antriebsmotor verbunden ist. Die Motorkurbel 10 ist dabei an einem ersten Endabschnitt 14 mit dem Verbindungselement 12 verbunden. An dem dem ersten Endabschnitt 14 gegenüberliegenden zweiten Endabschnitt 16 weist die Motorkurbel einen wie in Fig. 2 und Fig. 3 dargestellten Doppelkugelbolzen 18 auf, an welchem eine in Fig. 2 und Fig. 3 nicht dargestellte erste Gelenkstange 20 und eine zweite Gelenkstange 22 vorgesehen sind. An der ersten Gelenkstange 20 ist ein für die Beifahrerseite des Kraftfahrzeugs vorgesehener Scheibenwischerarm 24 angeordnet und die zweite Gelenkstange 22 ist mit einem Scheibenwischerarm 26, welcher an der Fahrerseite des Kraftfahrzeugs angeordnet ist, verbunden. Dieses bekannte Gleichlaufwischsystem weist einen für die erste Gelenkstange 20 bzw. für den Scheibenwischerarm 24 der Beifahrerseite und einen für die zweite Gelenkstange 22 bzw. für den Scheibenwischerarm 26 der Fahrerseite gleich großen Kurbelradius, welcher durch den Kreis 28 dargestellt ist, auf. Durch die gleichen Kurbelradien für die erste Gelenkstange 20 und die zweite Gelenkstange 22 resultieren ungleiche Wischwinkel für die beiden Scheibenwischerarme 24, 26, da aufgrund der gleich großen Kurbelradien 28, 34 unterschiedliche Schwingenlängen der Scheibenwischerarme 24, 26 erzeugt werden.

Bei derartigen, wie in Fig. 2 und Fig. 3 dargestellten, aus dem Stand der Technik bekannten Gleichlaufwischsystemen ist der Doppelkugelbolzen 18 zu dem Verbindungselement 12 derart angeordnet, dass die Symmetrieachse 30 des Doppelkugelbolzens 18 parallel zu der Symmetrieachse 32 des Verbindungselements 12 angeordnet ist. Die parallele Anordnung der beiden Symmetrieachsen 30, 32 ist dabei unabhängig davon, ob die Motorkurbel 10 entlang ihrer Längsachse eben ausgebildet ist, wie in Fig. 2 gezeigt, oder aber eine Kröpfung oder eine Doppelkröpfung, wie in Fig. 3 gezeigt, aufweist.

Fig. 4 zeigt noch einmal einen Vergleich des Kurbelradius 28 der ersten Gelenkstange 20 und der sich daraus ergebenden Schwingenlänge 40 des Scheibenwischerarms 24 der Beifahrerseite zu dem Kurbelradius 24 der zweiten Gelenkstange 22 und der sich daraus ergebenden Schwingenlänge 42 des Scheibenwischerarmes 26 der Fahrerseite bei den aus dem Stand der Technik bekannten Gleichlaufwischsystemen, wobei sich aufgrund der gleichen Kurbelradien 28, 34 unterschiedliche Schwingenlängen 40, 42 für den Scheibenwischerarm 24 der Beifahrerseite und dem Scheibenwischerarm 26 der Fahrerseite ergeben. Die Schwingenlänge 40 für die Beifahrerseite ist dabei sehr klein, wohingegen die Schwingenlänge 42 für die Fahrerseite sehr groß ist. Dadurch weist der Scheibenwischerarm 24 der Beifahrerseite einen großen Antriebswinkel auf, wohingegen der Scheibenwischerarm 26 der Fahrerseite einen kleinen Antriebswinkel aufweist.

Fig. 5 und Fig. 6 zeigen hingegen jeweils eine schematische Darstellung des Verhältnisses der Kurbelradien 28, 34 zu den Schwingenlängen 40, 42 für ein Gleichlaufwischsystem eines erfindungsgemäßen Wischergestänges, wobei hierbei die erste Gelenkstange 20 einen zu der zweiten Gelenkstange 22 unterschiedlichen Kurbelradius 28, 34 aufweist. Fig. 5 zeigt das erfindungsgemäße Wischergestänge für einen Rundlaufbetrieb und Fig. 6 zeigt das erfindungsgemäße Wischergestänge für einen Reversierbetrieb. Bei dem erfindungsgemäßen Wischergestänge ist der Kurbelradius 28 der ersten Gelenkstange 20 dabei größer als der Kurbelradius 34 der zweiten Gelenkstange 22. Dadurch ergibt sich, dass sowohl der Scheibenwischerarm 24 der Beifahrerseite als auch der Scheibenwischerarm 26 der Fahrerseite eine große Schwingenlänge 40, 42 aufweisen. Dadurch ist eine optimale Kinematik des Wischergestänges realisiert bei gleichzeitig möglichst geringen Wischwinkeltoleranzen. Zudem wirken aufgrund der größeren erzielbaren Schwingenlängen 40, 42 geringere innere Kräfte im Wischerantrieb.

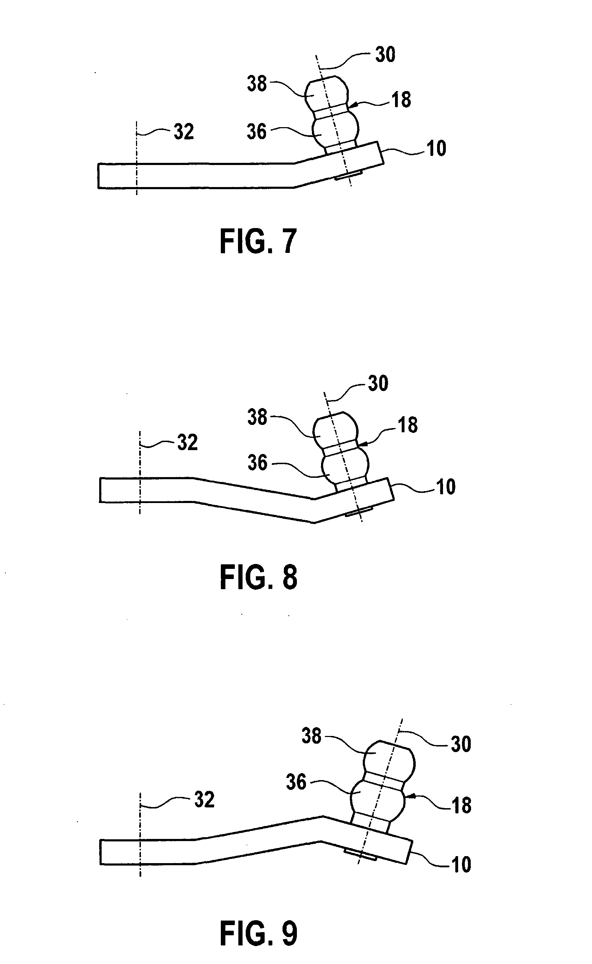

Die unterschiedlichen Kurbelradien 28, 34 können dabei dadurch realisiert werden, indem, wie in Fig. 7 bis 9 gezeigt, die Symmetrieachse 30 des Doppelkugelbolzens 18 winkelig zu der Symmetrieachse 32 des Verbindungselements 12 ausgebildet ist, so dass hierbei die Symmetrieachsen 30, 32 nicht mehr parallel zueinander verlaufen. Die erste Gelenkstange 20 für die Beifahrerseite ist dabei vorzugsweise an dem Kugelbolzen 36 des Doppelkugelbolzens 18 angeordnet, welcher näher an der Motorkurbel 10 angeordnet ist, so dass die erste Gelenkstange 20 für die Beifahrerseite einen größeren Kurbelradius 28 aufweist als die zweite Gelenkstange 22 für die Fahrerseite, welche an dem Kugelbolzen 38 des Doppelkugelbolzens 18 vorgesehen ist, welcher weiter von der Motorkurbel 10 entfernt angeordnet ist. Dadurch, dass hierbei der untere Kurbelradius 28 größer ausgebildet ist als der obere Kurbelradius 34, ist es möglich, den Bauraumbedarf des Wischgestänges nicht zu steigern.

Die Realisierung der winkeligen Anordnung der Symmetrieachsen 32, 30 zueinander ist, wie in Fig. 7 dargestellt, beispielsweise dadurch realisiert, dass die Motorkurbel 10 eine Einfachkröpfung aufweist, so dass der erste Endabschnitt 14 winkelig zu dem zweiten Endabschnitt 16 der Motorkurbel 10 angeordnet ist. Ferner ist es aber auch möglich, wie in Fig. 8 gezeigt, dass die Motorkurbel 10 eine Doppelkröpfung aufweist.

Ist die Symmetrieachse 30 des Doppelkugelbolzens 18 in Richtung der Symmetrieachse 32 des Verbindungselements 12 geneigt, so kann der Kurbelradius an dem unteren Kugelbolzen 36 gegenüber den bekannten Wischgestängen mit parallel zueinander verlaufenden Symmetrieachsen 30, 32 ohne einer Erhöhung des Bauraumbedarfs vergrößert werden. Dies ermöglicht eine Anwendung des erfindungsgemäßen Wischergestänges in verschiedensten Fahrzeug-Applikationen.

Fig. 9 zeigt eine weitere mögliche Ausführungsform, bei welcher die Motorkurbel ebenfalls eine Doppelkröpfung aufweist, aber die Symmetrieachse 30 des Doppelkugelbolzens 18 von der Symmetrieachse 32 des Verbindungselements 12 weg geneigt ist. Bei dieser Ausführungsform weist die Gelenkstange, welche an dem oberen Kugelbolzen 38 des Doppelkugelbolzens 18 angeordnet ist, einen größeren Kurbelradius und einen kleineren Abtriebswinkel auf als die Gelenkstange, welche an dem unteren Kugelbolzen 36 angeordnet ist.

## Patentansprüche

1. Wischergestänge einer Scheibenwaschanlage für ein Kraftfahrzeug, umfassend
eine Motorkurbel (10) mit einem ersten Endabschnitt (14) und einem zweiten Endabschnitt (16),
wobei die Motorkurbel (10) an ihrem ersten Endabschnitt (14) über ein Verbindungselement (12) mit einem Antriebsmotor verbunden ist und wobei die Motorkurbel (10) an ihrem zweiten Endabschnitt (16) einen Doppelkugelbolzen (18) aufweist, welcher mit einer ersten Gelenkstange (20) und einer zweiten Gelenkstange (22) verbunden ist,
wobei durch eine Verdrehbewegung der Motorkurbel (10) ein erster Kurbelradius (28) auf die erste Gelenkstange (20) und ein zweiter Kurbelradius (34) auf die zweite Gelenkstange (22) übertragbar ist,
wobei der erste Kurbelradius (28) der ersten Gelenkstange (20) eine andere Größe aufweist als der zweite Kurbelradius (34) der zweiten Gelenkstange (22),
**dadurch gekennzeichnet, dass**
der Doppelkugelbolzen (18) eine Symmetrieachse (30) aufweist, welche winklig zu der Symmetrieachse (32) des Verbindungselements (12) vorgesehen ist.

2. Wischergestänge nach Anspruch 1, **dadurch gekennzeichnet, dass** die Symmetrieachse (30) des Doppelkugelbolzen (18) in Richtung der Symmetrieachse (32) des Verbindungselements (12) geneigt ist.

3. Wischergestänge nach Anspruch 1, **dadurch gekennzeichnet, dass** die Symmetrieachse (30) des Doppelkugelbolzen (18) von der Symmetrieachse (32) des Verbindungselements (12) weg geneigt ist.

4. Wischergestänge nach einem der Ansprüche 1 bis 3, **dadurch gekennzeichnet, dass** der zweite Endabschnitt (16) winklig zu dem ersten Endabschnitt (14) der Motorkurbel (10) ausgebildet ist.

5. Wischergestänge nach Anspruch 4, **dadurch gekennzeichnet, dass** die Motorkurbel (10) eine Einfachkröpfung aufweist.

6. Wischergestänge nach Anspruch 4, **dadurch gekennzeichnet, dass** die Motorkurbel (10) eine Doppelkröpfung aufweist.

7. Scheibenwischeranlage für eine Kraftfahrzeug, umfassend ein Wischergestänge nach einem der Ansprüche 1 bis 6.

## Claims

1. Wiper linkage of a windshield washer system for a motor vehicle, comprising
a motor crank (10) with a first end section (14) and a second end section (16),
wherein the motor crank (10) is connected at the first end section (14) thereof to a driving motor via a connecting element (12), and
wherein the motor crank (10) has, at the second end section (16) thereof, a double ball pin (18) which is connected to a first articulated rod (20) and a second articulated rod (22),
wherein a first crank radius (28) is transmittable to the first articulated rod (20) and a second crank radius (34) is transmittable to the second articulated rod (22) by a rotational movement of the motor crank (10),
wherein the first crank radius (28) of the first articulated rod (20) differs in size from the second crank radius (34) of the second articulated rod (22), **characterized in that**
the double ball pin (18) has an axis of symmetry (30) which is provided at an angle to the axis of symmetry (32) of the connecting element (12).

2. Wiper linkage according to Claim 1, **characterized in that** the axis of symmetry (30) of the double ball pin (18) is inclined in the direction of the axis of symmetry (32) of the connecting element (112).

3. Wiper linkage according to Claim 1, **characterized in that** the axis of symmetry (30) of the double ball pin (18) is inclined away from the axis of symmetry (32) of the connecting element (12).

4. Wiper linkage according to one of Claims 1 to 3, **characterized in that** the second end section (16) is formed at an angle to the first end section (14) of the motor crank (10).

5. Wiper linkage according to Claim 4, **characterized in that** the motor crank (10) has a single offset.

6. Wiper linkage according to Claim 4, **characterized in that** the motor crank (10) has a double offset.

7. Windshield wiper system for a motor vehicle, comprising a wiper linkage according to one of Claims 1 to 6.

## Revendications

1. Tringlerie d'essuie-glace d'un système de lave-glace pour un véhicule automobile, comportant une manivelle de moteur (10) comprenant une première portion d'extrémité (14) et une deuxième portion d'extrémité (16),
la manivelle de moteur (10) étant reliée, à sa première portion d'extrémité (14), à un moteur d'entraînement par le biais d'un élément de liaison (12) et
la manivelle de moteur (10) comprenant, à sa deuxième portion d'extrémité (16), un boulon à double rotule (18), lequel est relié à une première biellette articulée (20) et à une deuxième biellette articulée (22),
un premier rayon de manivelle (28) pouvant être transmis à la première biellette articulée (20) et un deuxième rayon de manivelle (34) pouvant être transmis à la deuxième biellette articulée (22) par un déplacement de rotation de la manivelle de moteur (10),
le premier rayon de manivelle (28) de la première biellette articulée (20) présentant une grandeur différente de celle du deuxième rayon de manivelle (34) de la deuxième biellette articulée (22), **caractérisée en ce que**
le boulon à double rotule (18) présente un axe de symétrie (30), lequel est situé suivant un angle par rapport à l'axe de symétrie (32) de l'élément de liaison (12).

2. Tringlerie d'essuie-glace selon la revendication 1, **caractérisée en ce que** l'axe de symétrie (30) du boulon à double rotule (18) est incliné en direction de l'axe de symétrie (32) de l'élément de liaison (12).

3. Tringlerie d'essuie-glace selon la revendication 1, **caractérisée en ce que** l'axe de symétrie (30) du boulon à double rotule (18) est incliné à l'écart de l'axe de symétrie (32) de l'élément de liaison (12).

4. Tringlerie d'essuie-glace selon l'une quelconque des revendications 1 à 3, **caractérisée en ce que** la deuxième portion d'extrémité (16) est réalisée de manière à présenter un angle par rapport à la première portion d'extrémité (14) de la manivelle de moteur (10).

5. Tringlerie d'essuie-glace selon la revendication 4, **caractérisée en ce que** la manivelle de moteur (10) présente un coude simple.

6. Tringlerie d'essuie-glace selon la revendication 4, **caractérisée en ce que** la manivelle de moteur (10) présente un coude double.

7. Système d'essuie-glace pour un véhicule automobile, comportant une tringlerie d'essuie-glace selon l'une quelconque des revendications 1 à 6.
